# EUROPÄISCHE PATENTSCHRIFT

(11) **EP 3 599 955 B1**
(45) Veröffentlichungstag und Bekanntmachung des Hinweises auf die Patenterteilung: **29.10.2025**
(21) Anmeldenummer: 18716559.2
(22) Anmeldetag: 29.03.2018
(51) Int. Cl.: A47J 37/06, A47J 37/04

(54) **VORRICHTUNG ZUM ERHITZEN UND/ODER GAREN VON LEBENSMITTELN**
DEVICE FOR HEATING AND/OR COOKING FOOD
DISPOSITIF PERMETTANT DE RÉCHAUFFER ET/OU DE CUIRE DES PRODUITS ALIMENTAIRES

(30) Priorität: 31.03.2017 DE 202017101922 U
(43) Veröffentlichungstag der Anmeldung: 05.02.2020
(73) Patentinhaber: reamotion GmbH, 27753 Delmenhorst (DE)
(72) Erfinder: REALES BERTOMEO, Emilio, 27753 Delmenhorst (DE)
(74) Vertreter: Eisenführ Speiser
(86) Internationale Anmeldenummer: PCT/EP2018/058129
(87) Internationale Veröffentlichungsnummer: WO 2018/178263

(56) Entgegenhaltungen:
- EP-A1- 2 062 514
- EP-A1- 2 062 514
- WO-A1-2015/028911
- WO-A1-2015/028911
- DE-A1- 19 730 829
- DE-A1- 19 730 829
- DE-A1- 2 064 457
- DE-A1- 2 064 457
- DE-T2- 602006 000 599
- DE-T2- 602006 000 599
- DE-U1- 202014 005 299
- DE-U1- 202014 005 299
- US-A1- 2014 245 897
- US-A1- 2014 245 897

## Beschreibung

Die Erfindung bezieht sich auf eine Vorrichtung zum Erhitzen und/oder Garen von Lebensmitteln, insbesondere von Fleischerzeugnissen und/oder Tiefkühlprodukten mit einem Gerätegehäuse mit mindestens einer Aufnahmeeinrichtung, wobei die Aufnahmeeinrichtung ein oder mehrere Aufnahmefächer aufweist, welche über wenigstens eine Öffnung im Gerätegehäuse zugänglich sind, und einen mit dem jeweiligen Aufnahmefach korrespondierenden in das oder aus dem Aufnahmefach einsetz- und entnehmbare Aufnahmebehälter für das Lebensmittel aufweist, und einer der Aufnahmeeinrichtung zugeordneten Heizeinrichtung mit einem oder mehreren Heizelementen.

Bei der Zubereitung von Lebensmitteln in der Schnellgastronomie werden unter anderem Fleischerzeugnisse, wie Bratwürste oder Burger-Scheiben, mithilfe von Grill- oder Brateinheiten und Tiefkühlprodukte, wie beispielsweise Pommes oder Kroketten, unter Verwendung einer offenen Fritteuse für den Verzehr zubereitet. Bei der üblichen Zubereitung entstehen aufgrund der Art der Zubereitung typischerweise fetthaltige und geruchsintensive Dämpfe. Im Bereich der Schnellrestaurants und von Imbissbetrieben wird versucht mithilfe aufwendiger Absaug- und Filteranlagen die fetthaltigen Dämpfe und Gerüche abzuleiten beziehungsweise zu binden, um die Belastung durch die beim Zubereiten der Lebensmittel entstehenden Dämpfe und Gerüche zu minimieren.

Darüber hinaus sind die in den Schnellrestaurants und Imbissbetrieben zum Einsatz kommenden Grill- und Brateinrichtungen sowie die Fritteusen dauerhaft auf einem bestimmten, gleichbleibenden Temperaturniveau zu halten, um eine entsprechende schnelle Zubereitung gewährleisten zu können. Das Halten der Zubereitungseinrichtungen auf der nötigen Temperatur hat jedoch einen hohen Energieaufwand zur Folge. Zudem bedarf es der Zubereitung von Lebensmitteln mit üblicherweise bekannten Vorrichtungen zum Erhitzen und/oder Garen von Lebensmitteln einer ständigen Überwachung beziehungsweise Kontrolle durch das Servicepersonal. Dies ist notwendig, um die optimale Qualität bei der Zubereitung der Lebensmittel zu gewährleisten.

Aus DE 20 2014 005 299 U1 ist zum Beispiel eine Vorrichtung zum Garen der vorbezeichneten Gattung bekannt. Die Vorrichtung zum Erhitzen und/oder Garen von Lebensmitteln weist eine Aufnahmeeinrichtung zum Zubereiten von Fleischerzeugnissen und eine Aufnahmeeinrichtung zum Zubereiten von Tiefkühlprodukten auf. Die Aufnahmeeinrichtungen sind innerhalb des Gerätegehäuses übereinander angeordnet, wobei durch die Vorrichtung ein Heißluftstrom zum gleichmäßigen Garen der Lebensmittel geführt wird, um ein gleichmäßiges Erhitzen und/oder Garen der in den Aufnahmeeinrichtungen zuzubereitenden Lebensmittel umsetzen zu können. Der Energieaufwand bei dieser Art der Zubereitung ist zwar reduziert, jedoch noch vergleichsweise hoch, da der durch die Vorrichtung geleitete Luftstrom fortwährend auf einem vorbestimmten Temperaturniveau zu halten ist. Zudem kann an der bekannten Vorrichtung nicht gänzlich vermieden werden, dass fetthaltige und geruchsintensive Dämpfe doch beim Entnehmen der zubereiteten Produkte aus der bekannten Vorrichtung nach außen austreten.

Aus EP 2 062 514 A1 ist eine Kochvorrichtung für Lebensmittelprodukte bekannt, die ein Basisteil mit einer nach oben gerichteten Heizfläche und ein am Basisteil beweglich angelenktes oberes Element 5 mit einer darin angeordneten, nach unten gerichteten Heizfläche aufweist. An dem beweglich angelenkten Element ist eine Saugleitung zum Abführen von Kochdünsten aus dem Garraum vorgesehen.

Der Erfindung lag somit die Aufgabe zugrunde, eine Vorrichtung zum Erhitzen und/oder Garen von Lebensmitteln anzugeben, mithilfe der eine einfache und schonende Zubereitung von Lebensmitteln bei einem verringerten Energieaufwand und unter weitgehender Vermeidung einer Geruchsbelastung möglich ist.

Die Erfindung löst die ihr zugrunde liegende Aufgabe bei einer Vorrichtung zum Erhitzen und/oder Garen von Lebensmitteln der vorbezeichneten Art mit den Merkmalen von Anspruch 1. Insbesondere ist zumindest ein mit einer Aufnahmeeinrichtung fluidleitend koppelbarer Abluftkanal mit einem ansteuerbaren Ventilator zum Abführen der während des Garprozesses entstehenden Zubereitungs-Dämpfe in Form von Abluft aus dem Garraum nach dem Zubereiten der Lebensmittel vorgesehen, wobei innerhalb des Abluftkanals eine Plasmakammer zum Reinigen der Abluft aus dem Garraum angeordnet ist, wobei dem Abluftkanal eine Einrichtung zum Steuern von zumindest der aus dem oder den Aufnahmefächern abzuführenden Abluft zugeordnet ist, und wobei die Steuereinrichtung für die Abluft dazu eingerichtet ist, die fluidleitende Verbindung zwischen dem Abluftkanal und den Aufnahmefächern herzustellen und zu unterbrechen.

Der Erfindung liegt die Erkenntnis zugrunde, dass mithilfe eines Abluftkanales die beim Zubereiten der Lebensmittel entstehenden fetthaltigen und geruchsintensiven Dämpfe unmittelbar im Anschluss an die Zubereitung aus dem Garraum abgeführt werden können, sodass beim Öffnen der Garräume durch das Entnehmen der in die jeweiligen Aufnahmefächer eingesetzen Aufnahmebehälter keine Zubereitungsdämpfe über die Einsetzöffnungen in die Umgebung ausströmen.

Um gemäß diesem Aspekt der vorliegenden Erfindung die Wärme während des Zubereitens der Lebensmittel innerhalb der Garräume zu halten, ist der Abluftkanal bedarfsgesteuert fluidleitend mit dem jeweiligen Aufnahmefach der Aufnahmeeinrichtung koppelbar. Das heißt vorliegend, dass der Abluftkanal während des Zubereitens der Lebensmittel keine fluidleitende Verbindung zum jeweiligen Aufnahmefach besteht bzw. diese unterbrochen ist. Erst mit Beendigen des Zubereitungs- oder Garvorganges wird die fluidleitende Verbindung zwischen dem jeweiligen Aufnahmefach und dem Abluftkanal hergestellt. Ferner ist innerhalb des Abluftkanales ein bevorzugt ansteuerbarer Ventilator angeordnet, der aktiviert wird, wenn die fluidleitende Verbindung zwischen dem Abluftkanal und dem Aufnahmefach besteht, und die Dämpfe aus dem jeweiligen Garraum abführt. Wird die fluidleitende Verbindung unterbrochen, wird auch der Ventilator wieder abgeschaltet.

Erfindungsgemäß ist innerhalb des Abluftkanales eine Plasmakammer zum Reinigen der aus dem Aufnahmefach oder den Aufnahmefächern abgeführten Abluft angeordnet. Innerhalb der Plasmakammer erfolgt bevorzugt eine Ionisation der durch die Plasmakammer geführten Abluft. In die Plasmakammer eingeleitete Abluft, insbesondere darin enthaltene Bestandteile, wie kleinste Fettpartikel, oder Öle werden so umgewandelt, dass im Abluftkanal nach der Plasmakammer vornehmlich Sauerstoff, Kohlendioxid und Wasserdampf Bestandteile der behandelten Abluft bilden. Mithilfe der im Abluftkanal zum Einsatz kommenden Plasmakammer wird die Abluft von bis zu 80% der darin enthaltenen nicht erwünschten Bestandteile gereinigt, vorzugsweise bis zu 98% der nicht erwünschten Bestandteile. Die das Gerätegehäuse verlassende Abluft ist damit nahezu vollständig gereinigt, wodurch die Belastung der Umgebungsluft auf ein Minimum reduziert ist.

Erfindungsgemäß ist ferner dem Abluftkanal eine Einrichtung zum Steuern von zumindest der aus dem oder den Aufnahmefächern abzuführenden Abluft zugeordnet. Es ist vorgesehen, dass die Steuereinrichtung für die Abluft, nachdem die Zubereitung der Lebensmittel in dem jeweiligen Aufnahmefach erfolgt ist, eine fluidleitende Verbindung zwischen dem Abluftkanal und dem oder den Aufnahmefächern herstellt. In
einer weiteren Ausführungsform ist die Steuereinrichtung dazu eingerichtet, dass die verschiedenen Aufnahmefächer von erster und zweiter Aufnahmeeinrichtung für die Lebensmittel einzeln oder auch gemeinsam fluidleitend in Verbindung mit dem Abluftkanal gebracht werden beziehungsweise die fluidleitende Verbindung vor Beginn des nächsten Garvorganges in eine der Aufnahmeeinrichtungen wieder unterbrochen wird. Mittels der Einrichtung zum Steuern der Abluft ist in einer Ausführungsform gewährleistet, dass die Aufnahmefächer für die darin einzusetzenden Aufnahmebehälter während des Zubereitungsvorganges der Lebensmittel zur Ausbildung des nach außen hin geschlossenen Garraumes unter Verwendung geeigneter Abtrenn- oder Schließmittel im Verbindungsbereich zum Abluftkanal abdichten verschlossen sind.

Eine Weiterbildung der erfindungsgemäßen Vorrichtung sieht vor, dass die Einrichtung zum Steuern der Abluft wenigstens eine ansteuerbare Abluftklappe aufweist, mittels der wenigstens eine mit dem Abluftkanal verbundene Auslassöffnung am Aufnahmefach öffenbar und verschließbar ist, und vorzugsweise eine ansteuerbare Zuluftklappe aufweist, mittels der zumindest eine über einen Zuluftkanal mit der Umgebung verbundene Einlassöffnung am Aufnahmefach zum Einbringen von Frischluft in das Aufnahmefach öffenbar und verschließbar ist. Das Vorsehen einer Abluftklappe und einer Zuluftklappe an einem jeweiligen Aufnahmefach von erster und/oder zweiter Aufnahmeeinrichtung ermöglicht das einfache Steuern des Abführens der während des Garprozesses entstehenden Zubereitungsdämpfe aus dem Aufnahmefach oder das Blockieren der Verbindung mit dem Abluftkanal. Über die Einlassöffnung, welche mittels der Zuluftklappe geöffnet oder geschlossen werden kann, ist eine Zufuhr von Frischluft in das Innere der des Aufnahmefaches erreicht, wodurch der Luftaustausch innerhalb des Aufnahmefaches begünstigt wird. Ein sich nachteilig auswirkender Unterdruck im Aufnahmefach ist darüber vermieden. Vorzugsweise weisen die Aufnahmefächer von erster und zweiter Aufnahmeeinrichtung für die zu erhitzenden beziehungsweise garenden Lebensmittel jeweils separat ansteuerbare Abluftklappen und/oder Zuluftklappen auf. Ferner weist in einer bevorzugten Ausgestaltung der Erfindung die erste Aufnahmeeinrichtung jeweils individuell ansteuerbare Abluft- und Zuluftklappen für die beiden bevorzugt nebeneinander angeordneten Aufnahmefächer auf. Die Abluft- und Zuluftklappen sind vorzugsweise über entsprechende Antriebs- oder Stelleinrichtungen ansteuer- bzw. betätigbar, mittels denen die Abluft- und/oder Zuluftklappen in ihre Offenstellung beziehungsweise Geschlossenstellung an der entsprechenden Auslass- bzw. Einlassöffnung am Aufnahmefach gebracht werden.

Bevorzugt ist innerhalb des Abluftkanales ein der Plasmakammer vorgeschalteter Luftverwirbler zum Durchmischen der Abluft und vorzugsweise zum Beimischen von Umgebungsluft aus dem Gehäuseinneren angeordnet, wobei vorzugsweise in der Wandlung des Gerätegehäuses wenigstens ein Ventilator zum Einleiten von Umgebungsluft in das Gerätegehäuse angeordnet ist. Mithilfe des innerhalb des Abluftkanales angeordneten Luftverwirblers wird in einer Ausführungsform die aus den Aufnahmefächern der Vorrichtung abgeführte Abluft derart im Abluftkanal verwirbelt, dass über den Querschnitt des Abluftkanales ein gleichmäßiges Temperaturniveau herrscht. Darüber hinaus sollen Temperaturen von über 50°C, bevorzugt über 45°C innerhalb des Abluftkanales vermieden werden, bevor die Abluft in die Plasmakammer eintritt, um einen hohen Wirkungsgrad der im Abluftkanal angeordneten Plasmakammer zu gewährleisten. Vorzugsweise hat die Plasmakammer ihren höchsten Wirkungsgrad, wenn die in die Plasmakammer eingeleitete Abluft eine Temperatur von weniger 45°C aufweist.

Vorzugsweise ist in einer Ausführung der Erfindung der Luftverwirbler dazu eingerichtet, Umgebungsluft aus dem Gehäuseinneren über eine Art Bypasskanal in den Abluftkanal einzusaugen, wodurch sichergestellt werden kann, dass die Temperatur innerhalb des Abluftkanales die kritische Höchsttemperatur von 45°C nicht überschreitet. Das Beimischen der Umgebungsluft aus dem Gehäuseinneren erfolgt vorzugsweise über das Steuern des Druckes im Inneren des Gerätegehäuses. Bevorzugt ist ein oder sind mehrere Ventilatoren zum Einleiten von Umgebungsluft in das Gehäuseinnere am Gerätegehäuse angeordnet. Die Ventilatoren blasen kontrolliert Frischluft in das Gerätegehäuse ein. Je größer der Volumenstrom ist, der mittels der Ventilatoren in das Gerätegehäuse eingeblasen wird, desto geringer ist der Druckunterschied im Bereich der bevorzugt radial zum Ablaufkanal verlaufenden Bypasskanäle am Luftverwirbler, wodurch mehr Umgebungsluft aus dem Gehäuseinneren in den Abluftkanal gelangt. Wird der durch die Ventilatoren im Gerätegehäuse eingebrachte Volumenstrom reduziert, wird ein größerer Anteil an Abluft aus den Aufnahmefächern der Aufnahmeeinrichtung abgeführt, sodass sich dann der Anteil an Abluft aus den Aufnahmefächern im Abluftkanal erhöht. Der innerhalb des Abluftkanales angeordnete Luftverwirbler umfasst mindestens eine Leiteinrichtung mit mehreren Leitblechen, welche in den Strömungsweg des Abluftkanales vorstehen. Der Abluftkanal umfasst vorzugsweise einen rechteckigen Querschnitt, wobei der Luftverwirbler einen kreisförmigen Querschnitt hat, der im Verhältnis zum Querschnitt des Abluftkanales verringert ist. Damit stellt sich im Bereich des Luftverwirblers ebenfalls eine Strömungsbeschleunigung ein. Bevorzugt sind an den Seitenwänden des rechteckigen Ablufkanals Durchbrüche als Bypasskanäle ausgebildet, die radial zur Längsachse des Abluftkanals verlaufen. In einer anderen Ausführungsform ist im Abluftkanal unterhalb des Luftverwirblers ein aus dem Abluftkanal entnehmbarer Fettfilter angeordnet, der die Funktion eines Vorfilters umsetzt.

In einer anderen Weiterbildung der erfindungsgemäßen Zubereitungsvorrichtung ist innerhalb des Abluftkanales in Strömungsrichtung hinter der Plasmakammer eine Filtereinrichtung, vorzugsweise eine Aktivkohlefilter angeordnet. Die Filtereinrichtung wird bevorzugt dazu verwendet, um mögliche verbliebene restliche Bestandteile, die innerhalb der Plasmakammer nicht umgewandelt werden konnten, aus der Abluft herauszufiltern. Vorzugsweise wird ein Aktivkohlefilter verwendet, der einen bevorzugt hohen Wirkungsgrad beim Filtern von molekularen Bestandteilen innerhalb eines Abluftstromes erzielt. Zudem ist über die Ausgestaltung der Filtereinrichtung als Aktivkohlefilter erreicht, dass möglicherweise innerhalb der Plasmakammer entstehendes Ozon, das mit dem gereinigten Abluftstrom die Plasmakammer verlässt, in den Aktivkohlefilter übergeleitet wird, dort gebunden und in nichtschädliche Bestandteile umgewandelt wird. Das Überleiten von Ozon in die Filtereinrichtung bewirkt ferner die Selbstreinigung des Aktivkohlefilters. Damit sind die Standzeiten der der Plasmakammer nachgeschalteten Filtereinrichtung im Vergleich zu herkömmlichen Filtereinrichtungen derart verbessert, dass das Mehrfache der üblichen Standzeiten an der erfindungsgemäßen Vorrichtung erreicht wird. In einer Ausführungsform der Erfindung können dem Aktivkohlefilter Duftpads zugeordnet sein, die bei Passieren durch die Abluft einen Duftstoff an die Abluft abgeben.

Gemäß einer bevorzugten Ausgestaltung weist der Aufnahmebehälter ein Verschlussteil zum abdichtenden Verschließen des jeweiligen Aufnahmefaches auf, sodass ein nach außen im Wesentlichen abgeschlossener Garraum für das zu erhitzende Lebensmittel während der Zubereitung ausgebildet ist.

Mithilfe eines abgeschlossenen Garraumes ist das unerwünschte Austreten von Wärme, welche üblicherweise zur Zubereitung der Lebensmittel verwendet werden soll, vermieden. Die erzeugte Wärme bleibt somit innerhalb des Garraumes eingeschlossen, wodurch der Energieaufwand zum Erzeugen und Halten der benötigten Gartemperatur innerhalb des Garraumes deutlich reduziert werden kann. Ferner ist durch die geschlossene Ausgestaltung des Garraumes erreicht, dass etwaige fetthaltige und geruchsintensive Dämpfe während des Garvorganges nicht aus dem Garraum austreten. Damit ist einer Verunreinigung der Umgebungsluft entgegengewirkt, sodass die Geruchsbelastung bei der Zubereitung von Lebensmitteln mithilfe der erfindungsgemäßen Zubereitungsvorrichtung grundsätzlich verringert werden kann. Darüber hinaus kann auf den Einsatz von Fetten und Ölen als Temperaturvermittler innerhalb der erfindungsgemäßen Garräume verzichtet werden, sodass die Geruchsbelastung von vorne herein so niedrig gehalten werden kann wie möglich. Das zum Verschließen der Öffnung im Gerätegehäuse dienende Verschlussteil an dem oder den Aufnahmebehälter(n) ist bevorzugt mit die Öffnung für die Aufnahmebehälter begrenzenden Wandbereichen des Gerätegehäuses in Anlage bringbar. Für eine vorzugsweise hermetische Abriegelung ist es bevorzugt, an dem Verschlussteil ein Dichtelement mit elastischen Eigenschaften anzuordnen, wie beispielsweise eine Dichtlippe, mit dem das Austreten von Wärme oder Dämpfen aus dem Garraum weiter erschwert wird.

Eine bevorzugte Ausgestaltung der erfindungsgemäßen Vorrichtung zeichnet sich durch mehrere Aufnahmeeinrichtungen für verschiedene Lebensmittel aus, wobei eine erste Aufnahmeeinrichtung zum Erhitzen/Garen von Fleischerzeugnissen und eine zweite Aufnahmeeinrichtung zum Erhitzen/Garen von Tiefkühlprodukten ausgebildet ist, wobei die Aufnahmeeinrichtungen vorzugsweise jeweils Aufnahmefächer mit einer sich im Wesentlichen horizontalen Richtung erstreckenden Einsetzrichtung aufweisen. Mithilfe der bevorzugt mehreren Aufnahmeeinrichtungen kann eine größere Menge eines Lebensmittels und ferner auch unterschiedliche Lebensmittel, je nach Ausgestaltung der Aufnahmeeinrichtung, gleichzeitig mittels der erfindungsgemäßen Vorrichtung zubereitet werden. In einer Ausgestaltung der Erfindung weisen die Aufnahmeeinrichtungen eine waagerechte Einsetz- und/oder Entnahmerichtung auf. Darüber ist erreicht, dass die von der Heizeinrichtung im Aufnahmefach erzeugte Wärme durch den oberen geschlossenen Wandbereich innerhalb des Aufnahmefaches gehalten wird. Weder Wärme noch Dämpfe oder Gerüchte können über die geschlossene obere Wandung an den jeweiligen Aufnahmeeinrichtungen für die zuzubereitenden Lebensmittel austreten. Damit ist der Wärmerückhalt innerhalb des Garraumes oder der Garräume verbessert.

Bevorzugt weist die erste Aufnahmeeinrichtung zwei Aufnahmefächer mit in die Aufnahmefächer einsetz- und entnehmbaren Einsetzkassetten mit jeweils Aufnahmen für mehrere Fleischerzeugnisse auf und/oder die zweite Aufnahmeeinrichtung weist ein Aufnahmefach mit einer in das Aufnahmefach einsetz- und entnehmbaren Trommel für die zu erhitzenden Lebensmittel auf, wobei die Trommel vorzugsweise innerhalb des Aufnahmefaches drehbar aufgenommen ist. Je nach Art der zu erhitzenden Lebensmittel weisen die Einsetzkassetten entsprechend an die Form des Lebensmittel angepasste Aufnahmen auf. Die Aufnahme(n) der Einsetzkassette wird vorzugsweise von einem Aufnahmegitter für das Lebensmittel oder die zu erhitzenden Lebensmittel begrenzt. Bevorzugt ist die Einsetzkassette so ausgebildet, dass die vorzugsweise darin zuzubereitenden Fleischerzeugnisse, wie beispielsweise Bratwürste, in senkrechter Ausrichtung in einer Reihe hintereinander in den Aufnahmen der Einsetzkassette angeordnet sind. Die zweite Aufnahmeeinrichtung umfasst eine Trommel, für die insbesondere als Tiefkühlprodukte ausgebildeten Lebensmittel. Zum Erhitzen beziehungsweise Garen werden die Lebensmittel, wie beispielsweise Pommes oder Kroketten in die Trommel eingegeben. Die Trommel wird dann in das Aufnahmefach der zweiten Aufnahmeeinrichtung eingesetzt, wobei die Trommel vorzugsweise um ihre Längsachse drehbar aufgenommen ist. Während des Zubereitens der Tiefkühlprodukte wird die Trommel in eine Drehbewegung versetzt, worüber gewährleistet werden soll, dass die zu erhitzenden Lebensmittel gleichmäßig mit der innerhalb des Aufnahmefaches durch die Heizeinrichtung erzeugte Wärme erhitzt beziehungsweise gegart werden.

Die erfindungsgemäße Vorrichtung zeichnet sich in einer Weiterbildung durch eine elektronische Steuereinheit zum Steuern von zumindest der Einrichtung zum Steuern der Abluft und dem im Abluftkanal angeordneten Ventilator, und vorzugsweise ferner zum Steuern der Gartemperatur und/oder Garzeiten in den jeweiligen Aufnahmefächern aus. Die Steuereinheit wird verwendet, um insbesondere die einzelnen Abluft- und Zuluftklappen der Steuereinrichtung für die Abluft anzusteuern, sodass die Aufnahmefächer während der Zubereitung der Lebensmittel abdichtend verschlossen sind. Die elektronische Steuereinheit umfasst eine Reihe von Sensoren, wie beispielsweise Kontaktsensoren, welche erfassen, ob ein Aufnahmebehälter in einem jeweiligen Aufnahmefach eingesetzt oder daraus entnommen ist. Ferner umfasst die Sensoreinheit vorzugsweise mehrere Temperatursensoren zum Überwachen von beispielsweise der Ablufttemperatur an verschiedenen Abschnitten des Abluftkanales. Darüber hinaus sind in verschiedenen Bereichen des Gerätegehäuses Drucksensoren zur Erfassung des Absolutdruckes im Gerätegehäuse vorgesehen. Neben der Steuerung der Abluftfunktion über dem Abluftkanal an der Vorrichtung erfolgt mittels der elektronischen Steuereinheit die Regelung der Temperatur innerhalb der Aufnahmefächer von erster und zweiter Aufnahmeeinrichtung, also eine Ansteuerung der den Aufnahmefächern für die Lebensmittel zugeordneten Heizeinrichtungen. Ferner ist auch bevorzugt die Antriebseinheit, mittels der die Trommel der zweiten Aufnahmeeinrichtung in eine Drehbewegung versetzt wird, signalgebend mit der elektronischen Steuereinheit verbunden. Mithilfe der Steuereinrichtung, welche über ein am Gerätegehäuse angeordnetes Display steuerbar ist, können die Garzeiten und Gartemperaturen je nach Art des zuzubereitenden Lebensmittel individuell eingestellt beziehungsweise angepasst werden.

Vorzugsweise sind die in die Aufnahmefächer einsetzbaren Aufnahmebehälter von den jeweils zugeordneten Heizeinrichtungen mittels Abschirmblechen abgetrennt, wobei die Abschirmbleche vorzugsweise eine Lochung mit einer auf die Heizleistung der Heizeinrichtung abgestimmten Lochgröße aufweisen. Mithilfe der Abschirmbleche wird der Einfluss der Strahlungswärme der Heizelemente der Heizeinrichtung auf die zuzubereitenden Lebensmittel beeinflusst. Durch die Lochung in den Abschirmblechen kann somit nur ein vorbestimmter Teil an Strahlungswärme unmittelbar in den Bereich des Aufnahmefaches übertreten und auf die dort befindlichen Lebensmittel einwirken. Vorzugsweise bilden die Abschirmbleche an der ersten Aufnahmeeinrichtung sämtliche Flächenbereiche der die Aufnahmefächer begrenzenden Wandungen aus. Insbesondere bilden die Abschirmbleche Bereiche der seitlichen, oberen und unteren Wandungen der nebeneinander angeordneten Aufnahmefächer aus. Die seitlichen Wandungen sind bevorzugt planparallel zueinander ausgerichtet. In einer bevorzugten Ausführungsform weisen die seitlichen Abschirmbleche über etwa ihre halbe Höhe, ausgehend von der Unterseite der seitlichen Wandungen die Anzahl Lochungen auf. Damit ist ein Gleichgewicht zwischen der auf die Lebensmittel wirkenden Strahlungswärme und der sich innerhalb des Aufnahmefaches durch die Wärme bildenden freien Konvektion erreicht. Dadurch werden die zuzubereitenden Lebensmittel, insbesondere die Fleischerzeugnisse in der ersten Aufnahmeeinrichtung gleichmäßig über die gesamte Höhe gegart und insbesondere eine gleichmäßige Bräunung der Oberfläche erzielt.

In einer bevorzugten Ausgestaltung der erfindungsgemäßen Vorrichtung ist die Heizeinrichtung, insbesondere deren Heizelemente an der ersten Aufnahmeeinrichtung außerhalb des von den Abschirmblechen begrenzten Aufnahmefaches angeordnet. Die Heizeinrichtung ist derart ausgebildet, dass die Heizelemente für die beiden Aufnahmefächer im Bedarfsfall separat beziehungsweise individuell durch die elektronische Steuereinheit angesteuert werden können, wodurch das unnötige Aufheizen des zweiten Aufnahmefaches vermieden ist.

Gemäß einer Weiterbildung der erfindungsgemäßen Vorrichtung weist die erste Aufnahmeeinrichtung für die Fleischerzeugnisse einen im Wesentlichen V-förmigen, oberen Deckenbereich auf, der dazu eingerichtet ist, im Inneren der ersten Aufnahmeeinrichtung eine freie Zirkulationsströmung für Gase während des Garprozesses zu erzeugen. Innerhalb der Aufnahmefächer der ersten Aufnahmeeinrichtung ist damit einem Wärmestau im oberen Bereich des Aufnahmefaches entgegen gewirkt. Durch die schräge Ausgestaltung des Deckenbereiches ist vielmehr eine freie Zirkulationsströmung innerhalb des Aufnahmefaches erzeugt, wodurch eine gleichmäßige Durchmischung der Temperatur und damit verbunden ein gleichmäßiger Garprozess des im Aufnahmebehälter aufgenommenen Lebensmittel erreicht ist. Zudem sind die oberen und unteren Wandungen des Aufnahmefaches bevorzugt vollflächig mit Lochungen versehen, welche die Zirkulationsströmung durch die Aufnahmefächer in vertikaler Richtung begünstigen. Der Deckenbereich der ersten Aufnahmeeinrichtung weist eine Art Keilform auf, wobei die im Winkel zueinander verlaufenden Wandflächen der Decke in einem Winkel in einem Bereich von etwa 120° bis etwa 160° verlaufen.

Bevorzugt weist der Aufnahmebehälter der ersten Aufnahmeeinrichtung unterhalb der Halterung für die Fleischerzeugnisse ein Abführelement, vorzugsweise eine geneigte Abführrinne, zum Abführen von Flüssigkeiten aus dem Aufnahmefach auf. Etwaige beim Garprozess entstehende Garflüssigkeit verbleibt somit während des ablaufenden Garprozesses nicht innerhalb des Aufnahmefaches sondern wird in einen Bereich außerhalb des Aufnahmefaches heraus geleitet. Darüber ist dem zusätzlichen Erzeugen von fetthaltigen und geruchsintensiven Dämpfen entgegengewirkt, so dass zumindest bei einem nachfolgenden Garprozess die Flüssigkeit aus dem vorherigen Garprozess nicht im Aufnahmefach verblieben ist und wiederum erhitzt wird. Die Entstehung solcher unerwünschter Dämpfe ist durch das Herausleiten der Flüssigkeit aus dem Aufnahmefach auf ein Minimum reduziert.

Bevorzugt ist unterhalb der ersten Aufnahmeeinrichtung ein mit dem Abführelement am Aufnahmebehälter korrespondierender Flüssigkeits-Auffangbehälter angeordnet, der vorzugsweise mittels einer Wärmeisolierung von dem darüber angeordneten Aufnahmefach abgeschirmt ist. Der Auffangbehälter dient vorzugsweise als Sammelbehälter für die Garflüssigkeit, die beispielsweise während eines Tages durch die Vielzahl an aufeinanderfolgenden Garprozessen entsteht. Der Flüssigkeits-Auffangbehälter ist entnehmbar am Gerätegehäuse ausgebildet, sodass er in regelmäßigen Abständen entleert und gereinigt werden kann. Vorzugsweise ist der Auffangbehälter mit einem Mikroschalter ausgerüstet, der detektiert, wann ein vorbestimmter Flüssigkeitsstand innerhalb des Auffangbehälters erreicht ist, der ggf. ein vorzeitiges Entleeren des Auffangbehälters notwendig macht. Der Mikroschalter ist mit der elektronischen Steuereinheit gekoppelt, die bei Betätigung des Mikroschalters ein Alarmsignal an das Anzeige- und Bediendisplay ausgibt. Ein Bediener wird dann über die Notwendigkeit der Reinigung des Flüssigkeits-Auffangbehälters informiert.

Eine Weiterbildung der Erfindung sieht vor, dass die Heizeinrichtung der zweiten Aufnahmeeinrichtung innerhalb des zylindrischen Aufnahmefaches angeordnet und von dem bereichsweise und parallel zur Wandung des Aufnahmefaches erstreckenden Abschirmblech abgetrennt ist. Vorzugsweise ist innerhalb des zylindrisch ausgebildeten Aufnahmefaches mittels des Abschrimbleches, das bevorzugt partiell eine Lochung aufweist, ein Gleichgewicht zwischen der durch die Heizelemente der Heizeinrichtung wirkenden Wärmestrahlung und der innerhalb des zylindrischen Aufnahmefaches entstehenden Konvektion erzielt. Die Heizeinrichtung wie auch das zwischen der Heizeinrichtung und der Trommel verlaufende Abschirmblech erstreckt sich etwa über die Hälfte des Umfangs des zylindrischen Aufnahmefaches. Das Abschirmblech weist vorzugsweise wenigstens einen Flächenbereich mit einer Lochung auf, über welche die direkte Wärmestrahlung auf die im Aufnahmefach angeordnete Trommel gewährleistet ist. Mittels der Lochung wird wiederum nur ein Teil der erzeugten Wärmestrahlung direkt auf die Trommel übertragen. Der andere Teil wird durch die verschlossenen Bereiche des Abschirmbleches entlang der Wandung des zylindrischen Aufnahmefaches der zweiten Aufnahmeeinrichtung abgeleitet, wodurch sich auch in der zweiten Aufnahmeeinrichtung ein Wärmezirkulationsstrom ausbildet. Dadurch ist ein verbesserter Wärmeeintrag und somit eine beschleunigte Garung der in der Trommel aufgenommenen Lebensmittel erreicht. In einer Ausführungsform ist unterhalb des trommelartigen Aufnahmebehälters ist ein Krümelblech angeordnet, das vermeidet, dass Teile des zuzubereitenden Lebensmittels in Kontakt mit der Heizeinrichtung gelangen.

Vorzugsweise weist die Trommel einen zylindrischen Aufnahmeraum auf, der von einer Trommelwandung begrenzt ist, die eine Lochung umfasst. Insbesondere die Mantelfläche der Trommel weist eine gleichmäßige Lochung auf, wodurch sowohl Wärmestrahlung als auch ein Wärmestrom in das Innere des trommelartigen Aufnahmebehälters eindringen kann. Vorzugsweise ist die Lochung in der Trommelwandung versetzt zur Lochung in dem zugeordneten Abschirmblech angeordnet.

In einer Weiterbildung der erfindungsgemäßen Vorrichtung ist die Trommel mit einer in der Kammer drehbar gelagerten Halterung reversibel koppel- und entkoppelbar, wobei die Halterung mit einer Antriebseinrichtung drehgebend verbunden ist. Vorzugsweise weist die Trommel an ihrer in das Aufnahmefach einschiebbaren Stirnseite wenigstens ein Verrastmittel auf, das mit der Halterung im Aufnahmefach insbesondere eine Formschlussverbindung eingeht. Über den Formschluss ist eine beliebig oft durchführbare Kopplung oder Entkopplung der Trommel mit der Halterung im Aufnahmefach der zweiten Aufnahmeeinrichtung möglich.

Bevorzugt ist die erste und/oder die zweite Aufnahmeeinrichtung von einem vorfertigbaren Isolierteil zumindest bereichsweise umhüllt, das aus einem an die Form der jeweiligen Aufnahmeeinrichtung anpassbaren Isolierwerkstoff ausgebildet ist. Vorzugsweise wird als Isoliermaterial ein unmittelbar in Form bringbarer Isolierwerkstoff verwendet, mittels dem entsprechend vorgefertigte, formstabile Isolierteile ausgebildet werden können. Die vorgefertigten Isolierteile können dann relativ einfach um die jeweilige Aufnahmeeinrichtung und die ggf. außerhalb der Aufnahmefächer der Aufnahmeeinrichtung angeordnete Heizeinrichtung herum angeordnet werden. Mittels der vorgefertigten Isolierteile erfolgt bevorzugt eine nahezu vollständige Kapselung der Aufnahmeeinrichtung außer den Aussparungen für die Einsetz- oder Entnahmeöffnung für die jeweiligen Aufnahmebehälter. Vorzugsweise wird als Isolierwerkstoff ein unter der Bezeichnung "K-Term" bekannter Isolationswerkstoff verwendet. Mithilfe der Isolierteile kann vorzugsweise ein Temperaturunterschied von etwa 200°C zwischen der Innenseite der Isolierung und der Außenseite der Isolierung erreicht werden.

Die erfindungsgemäße Vorrichtung wird ferner weitergebildet durch folgende vorteilhafte Merkmale, die einzeln oder in Kombination verwirklicht sind:
innerhalb des Gerätegehäuses oder benachbart zu dem Gerätegehäuse ist ein sich wenigstens teilweise in vertikaler Richtung erstreckender Abluftkanal ausgebildet, welcher in fluidleitende Verbindung mit der Aufnahmeeinrichtung bringbar ist; und/oder
unterhalb zu der Aufnahmeeinrichtung mindestens ist ein Auffangelement zum Auffangen von während der Garung anfallender Flüssigkeiten, insbesondere Öle oder Fette angeordnet, welches vorzugsweise Teil eines Flüssigkeits-Auffangbehälters ist oder mit diesem kooperiert.

Die Erfindung wird im Folgenden Anhand eines bevorzugten Ausführungsbeispiels unter Bezugnahme auf die beigefügten Figuren näher beschrieben. Hierbei zeigen:
- Fig. 1:: eine perspektivische Ansicht der erfindungsgemäßen Vorrichtung zum Erhitzen und/oder Garen von Lebensmitteln;
- Fig. 2:: eine Vorderansicht der erfindungsgemäßen Vorrichtung nach Fig. 1;
- Fig. 3:: eine perspektivische Ansicht der Einzelkomponenten der erfindungsgemäßen Vorrichtung ohne Gerätegehäuse;
- Fig. 4:: eine Seitenansicht der erfindungsgemäßen Vorrichtung in einer ersten Schnittebene;
- Fig. 5:: eine perspektivische Ansicht der innerhalb des erfindungsgemäßen Abluftkanales angeordneten Komponenten;
- Fig. 6:: eine Seitenansicht der erfindungsgemäßen Vorrichtung in einer zweiten Schnittebene;
- Fig. 7:: eine perspektivische Ansicht der aus der ersten Aufnahme Einrichtung entnommenen Aufnahmebehälter für die Fleischerzeugnisse, und
- Fig. 8:: eine Vorderansicht der erfindungsgemäßen Vorrichtung im Schnitt.

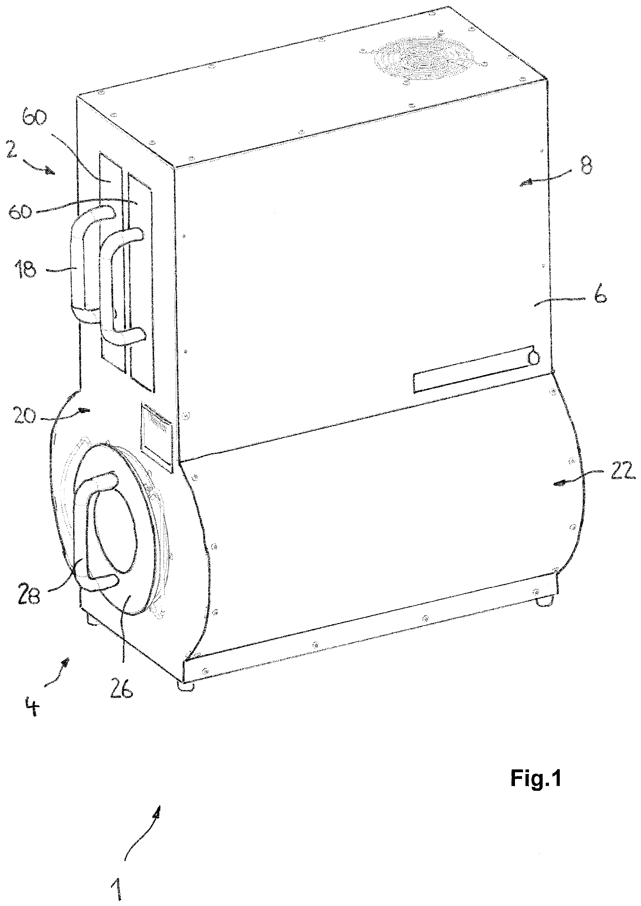

In Figur 1 ist eine Vorrichtung 1 zum Erhitzen und/oder Garen von Lebensmitteln abgebildet, welche eine erste Aufnahmeeinrichtung 2, insbesondere für Fleischerzeugnisse, und eine zweite Aufnahmeeinrichtung 4 für Tiefkühlprodukte wie beispielsweise Pommes oder Kroketten, aufweist. Die erfindungsgemäße Vorrichtung ist als Kombigerät ausgebildet, mit der bevorzugt das gleichzeitige Zubereiten unterschiedlicher Lebensmittel möglich ist. Die Vorrichtung 1 umfasst ein Gerätegehäuse 6, innerhalb dem die erste und zweite Aufnahmeeinrichtung 2, 4 integriert angeordnet sind.

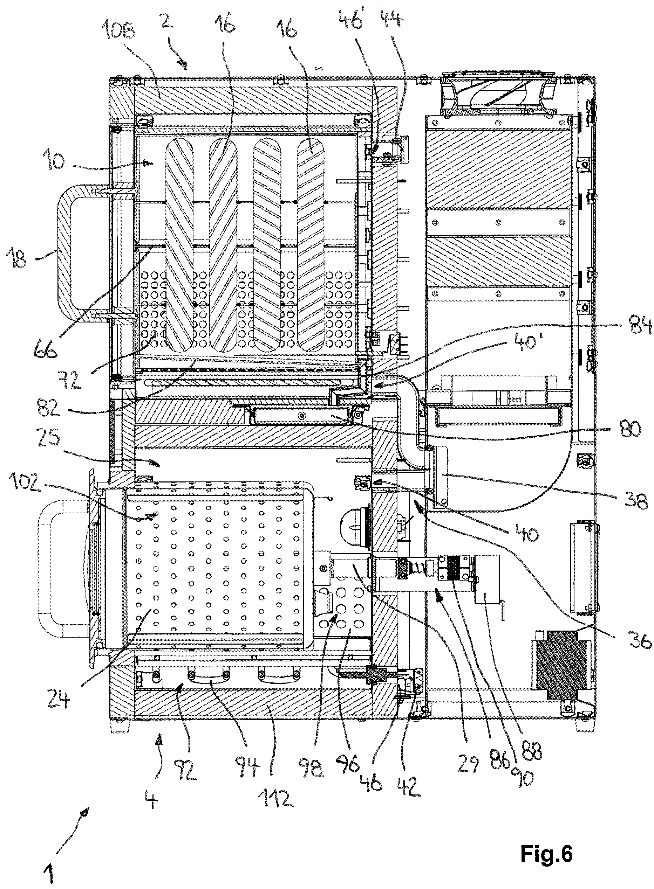

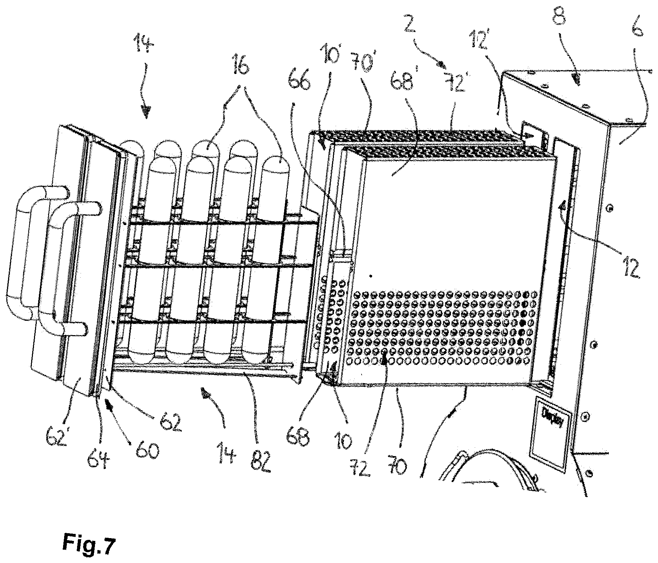

Die Aufnahmeeinrichtung 2, auch bezeichnet und ausgeführt als Grilleinrichtung 2, ist im vorliegenden Ausführungsbeispiel oberhalb der zweiten Aufnahmeeinrichtung 4 angeordnet. Die erste Aufnahmeeinrichtung 2 beziehungsweise Grilleinrichtung ist im oberen quaderförmigen Abschnitt 8 des Gerätegehäuses 6 angeordnet. Die Grilleinrichtung 2 weist zwei Aufnahmefächer 10, 10' auf, welche über Öffnungen 12, 12` (Fig. 7) im Gerätegehäuse 6 zugänglich sind. Die Aufnahmeeinrichtung 2 für die Fleischerzeugnisse ist dazu eingerichtet, zwei Aufnahmebehälter 14, 14' (Fig. 6) aufzunehmen. Die Aufnahmebehälter 14, 14' mit ihren Aufnahmen für die im vorliegenden Ausführungsbeispiel gezeigten Bratwürste 16, werden in die Aufnahmefächer 10, 10' eingeschoben. Zum Handhaben der Aufnahmebehälter 14, 14' ist jeweils ein Handgriff 18 vorgesehen, der an der Gerätegehäusefront 20 vorsteht.

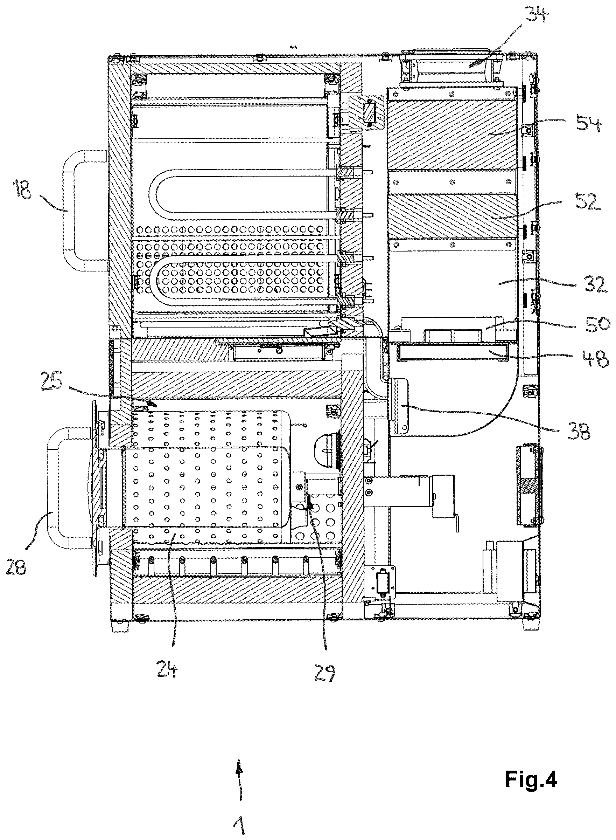

Unterhalb der als Grilleinrichtung ausgebildeten ersten Aufnahmeeinrichtung 2 ist im unteren zylinderförmigen Abschnitt 22 die zweite Aufnahmeeinrichtung 4 angeordnet, auch bezeichnet und ausgeführt als Gareinrichtung für Tiefkühlprodukte, wie Pommes oder Kroketten. Die zweite Aufnahmeeinrichtung 4 beziehungsweise Gareinrichtung umfasst eine zylindrische Trommel 24 (Fig. 4), welche in einem korrespondierend ausgebildeten Aufnahmefach 25 drehbar aufgenommen ist, von dieser ist in Fig. 1 der Deckel 26 zu sehen. Am Deckel 26 ist ebenfalls ein Handgriff 28 angeordnet, mit dem die Verbindung der Trommel 24 mit einer Halterung 29 (Fig.4) im Aufnahmefach 25 der Vorrichtung 1, wie nachfolgend näher erläutert, zum Herausnehmen der Trommel 24 aufgehoben bzw. zum Einsetzen erzeugt werden kann, sodass die Trommel 24 aus der zweiten Aufnahmeeinrichtung 4 entnehmbar beziehungsweise in diese wieder einsetzbar ist.

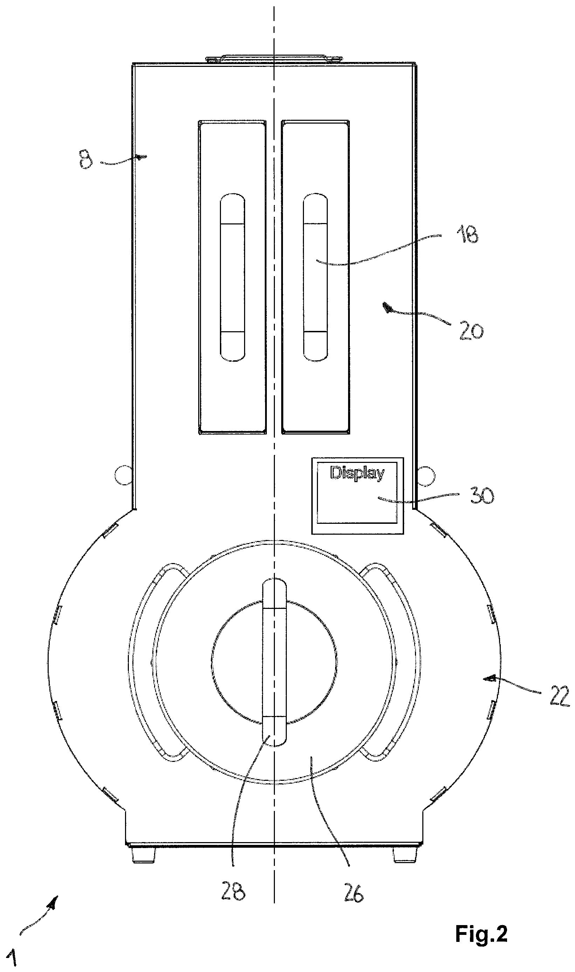

Figur 2 zeigt die Vorderansicht der erfindungsgemäßen Vorrichtung 1, an dem eine digitale Anzeige- und Bedieneinrichtung 30 angeordnet ist. Mithilfe der Anzeigeeinrichtung 30 erfolgt die Bedienung der einzelnen Aufnahmeeinrichtungen beziehungsweise werden über das Display entsprechende Einstellungen der Aufnahmeeinrichtungen 2, 4 oder etwaige Alarmsignale angezeigt beziehungsweise wiedergegeben. Ein Kernaspekt der vorliegenden Erfindung ist das abdichtende Verschließen der die jeweiligen Aufnahmebehälter 14, 14', 24 aufnehmenden Aufnahmefächer 10, 10', 25, sodass jedes Aufnahmefach 10, 10', 25 als ein nach außen abgeschlossener Garraum für das zu erhitzende Lebensmittel ausgebildet ist. Insbesondere der Aufnahmebehälter 14, 14' der ersten Aufnahmeeinrichtung 2 und der Aufnahmebehälter 24 der zweiten Aufnahmeeinrichtung 4 weisen in Figuren 1 und 2 nicht näher gezeigte Verschluss- oder Abdichtelemente auf, wie beispielsweise am Deckel 26 der Trommel 24 angeordnete Dichtlippe.

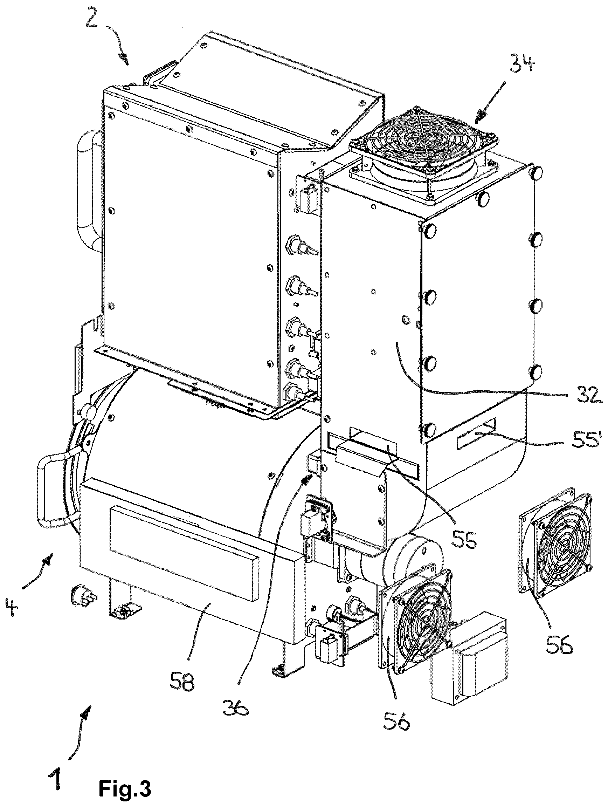

Figur 3 zeigt eine perspektivische Darstellung der Vorrichtung 1 ohne Gerätegehäuse und damit deren im Inneren angeordneten Einzelkomponenten. Damit wird neben den Aufnahmeeinrichtungen 2, 4 zum Zubereiten der Lebensmittel der weiterhin erfindungswesentliche Aspekt sichtbar. Innerhalb des Gerätegehäuses 6 ist ein Abluftkanal 32 angeordnet, der mit den Aufnahmefächern der Aufnahmeeinrichtungen 2, 4 fluidleitend koppelbar ist und über den die während des Gar- oder Grillprozesses entstehenden Zubereitungsdämpfe in Form von Abluft aus den Aufnahmefächern 10, 10', 25 in Form von Abluft in die Umgebung abgeführt werden soll. Um das Abführen der Abluft zu unterstützen, ist am oberen Ende des Abluftkanales 32 ein Ventilator 34 angeordnet, mittels dem die Abluft aus den Aufnahmefächern, 10, 10', 25 für die Aufnahmebehälter 14, 14', 24 abgesaugt wird. Dem Abluftkanal 32 ist eine Einrichtung 36 zum Steuern der aus den Aufnahmefächern 10, 10', 25 abzuführenden Abluft zugeordnet. Mithilfe der Einrichtung 36 zum Steuern der Abluft wird zumindest während des Betriebes der Grilleinrichtung 2 und der Gareinrichtung 4 die fluidleitende Verbindung zum Abluftkanal 32 unterbrochen, sodass keine Wärme während des Gar- oder Grillprozesses aus den Garräumen austreten kann.

In einer bevorzugten Ausführungsform der Erfindung weist die Einrichtung zum Steuern der Abluft 36 eine ansteuerbare Abluftklappe 38 auf, mittels der eine mit dem Abluftkanal verbundene Auslassöffnung, 40, 40` (Fig.6) an einem jeweiligen Aufnahmefach 10, 10', 25 geöffnet oder verschlossen wird. Ferner ist den Aufnahmefächern 10, 10' der ersten Aufnahmeeinrichtung 2 und dem Aufnahmefach 25 der zweiten Aufnahmeeinrichtung 4 jeweils eine Zuluftklappe 42, 44 zugeordnet, welche ebenfalls über die Steuereinrichtung zum Steuern der Abluft 36 angesteuert wird. Die Zuluftklappen 42, 44 sind dazu eingerichtet, eine entsprechende Einlassöffnung 46, 46' an den jeweiligen Aufnahmeeinrichtungen 2, 4 frei zu geben oder zu verschließen, sodass bei freigegebener Einlassöffnung Frischluft in das jeweilige Aufnahmefach 10, 10', 25 einströmen kann.

Die Figur 4 zeigt Schnittdarstellung durch die erfindungsgemäße Vorrichtung 1 und sollen insbesondere den Aufbau im Bereich der Aufnahmeeinrichtungen 2, 4 und des Abluftkanales 32 verdeutlichen. Im Abluftkanal 32 ist unmittelbar nach der im Abluftkanal angeordneten Abluftklappe 38 ein Fettfilter 48 angeordnet, mit dem eine Vorfilterung der aus den Aufnahmefächern 10, 10', 25 abgesaugten Abluft erfolgt. Unmittelbar dem Fettfilter 48 nachgeschaltet ist ein Luftverwirbler 50, der die abgeführte Abluft durchmischt, sodass ein gleichmäßiges Temperaturniveau über den gesamten Querschnitt des Abluftkanales 32 ausgebildet ist. Oberhalb des Luftverwirblers 50 ist eine Plasmakammer 52 zum Reinigen der Abluft angeordnet. Innerhalb der Plasmakammer erfolgt eine Ionisation der hindurch geführten Abluft, wodurch die mit der Abluft mitgetragenen Fett- und Geruchsmoleküle zersetzt werden. Der Plasmakammer 52 ist in Strömungsrichtung der Abluft eine Filtereinrichtung 54 nachgeschaltet, insbesondere ein Aktivkohlefilter, mit der restliche in der Abluft verbliebene unerwünschte Bestandteile herausgefiltert werden.

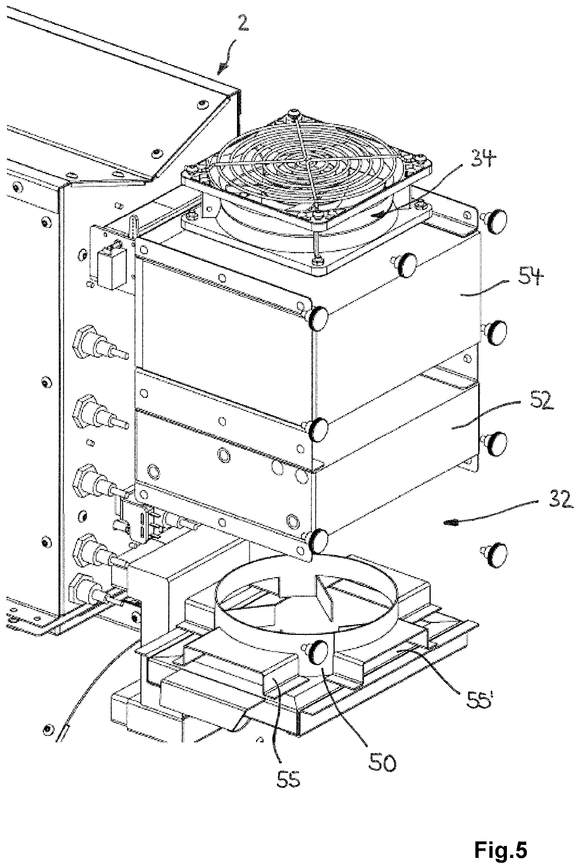

Wie ferner aus Fig. 5 in Kombination mit Fig. 3 ersichtlich, ist der Luftverwirbler 50 ferner zum Beimischen von Umgebungsluft aus dem Inneren des Gehäuses 6 eingerichtet, wodurch die Temperatur innerhalb des Abluftkanales 32 so angepasst werden kann, dass diese unter eine für den Betrieb der Plasmakammer 52 vorbestimmten Höchsttemperatur verringert werden kann. In einer Ausführungsform der Erfindung ist der Luftverwirbler 50 mit radial ausgerichteten Bypass-Kanälen 55, 55' fluidleitend verbunden. Über die Bypass-Kanäle 55, 55' ist eine Verbindung in das Innere des Gehäuses 6 ausgebildet. Um das Verhältnis der Beimischung an Umgebungsluft anpassen zu können, sind am Gehäuse 6 rückwärtig zwei Ventilatoren 56, 56' angeordnet (Fig.3), mittels denen die Luftzufuhr in das Gerätegehäuse und damit die Druckverhältnisse im Gerätegehäuse angepasst werden können. Wie aus Figur 3 ferner ersichtlich, ist eine elektronische Steuereinheit zum Steuern von zumindest der Einrichtung zum Steuern der Abluft 36 und dem am Gerätegehäuse 6 angeordneten Ventilatoren 34, 56, 56' und ferner zum Steuern der Gar- und Grilltemperaturen und/oder Gar- und Grillzeiten an den jeweiligen Aufnahmeeinrichtungen 2, 4 vorgesehen. Die Steuereinheit 58 ist signalleitend mit der Bedien- und Anzeigeeinrichtung 30 an der Gerätegehäusefront 20 gekoppelt.

In den Figuren 6 bis 8 ist die nähere Ausgestaltung der als Grilleinrichtung ausgebildeten Aufnahmeeinrichtung 2 und der als Gareinrichtung ausgebildeten zweiten Aufnahmeeinrichtung 4 im Detail gezeigt. Die erste Aufnahmeeinrichtung 2 ist eine Grilleinrichtung für Fleischerzeugnisse, wobei in der gezeigten Ausführungsform die Aufnahmebehälter 14, 14' Aufnahmen für Bratwürste 15 aufweisen. In einer nicht gezeigten Ausführungsform kann der Aufnahmebehälter auch dazu eingerichtet sein, Fleischstücke, wie beispielsweise Schnitzel aufzunehmen. Die Grillzeiten sind dann entsprechend des zuzubereitenden Fleischerzeugnisses anzupassen. Wie aus den Figuren 6 bis 8 ersichtlich, sind die Bratwürste 16 vertikal innerhalb des Aufnahmebehälters 14, 14' aufgenommen. Zum Verschließen der Öffnungen 12, 12' der Aufnahmefächer 10, 10' an der ersten Aufnahmeeinrichtung 2 ist ein doppelwandiges Verschlussteil 60 angeordnet, das aus einem Innenblech 62 und einem Außenblech 62' ausgebildet ist, die mit unterschiedlichen Bereichen der Öffnungen abdichten. Zusätzlich ist am Außenblech 62' ein umlaufendes Dichtelement 64 in Form einer Silikondichtung vorgesehen. Die Aufnahmebehälter 14, 14' sind über Führungsnuten 66 in der Wandung des Aufnahmefaches 10, 10' aufgenommen, wobei die Wandung des Aufnahmefaches aus Abschirmblechen 68, 68' ausgebildet ist. Die aus den Abschirmblechen 68, 68', 70, 70' ausgebildete Wandung der Aufnahmefächer, welche nach Art einer Explosionsdarstellung in Figur 7 gezeigt ist, ist üblicherweise fest innerhalb des Gerätegehäuses 6 integriert.

Wie Figur 7 verdeutlicht, weisen die Abschirmbleche 68 bis 70' in vorbestimmten Flächenbereichen eine Lochung 72, 72' auf. Die Lochung in den Abschirmblechen 68 bis 70' dient insbesondere um die innerhalb der Aufnahmefächer erzeugte Wärme, welche von mehreren Heizelementen 74, 74' einer Heizeinrichtung 76 der ersten Aufnahmeeinrichtung 2 erzeugt wird, gleichmäßig innerhalb der Aufnahmefächer 10, 10' zu verteilen. Die Lochung 72, 72' bewirkt ein Gleichgewicht zwischen der von den Heizelementen 74, 74' abgegebenen Strahlungswärme und der innerhalb der Aufnahmeeinrichtung 2 entstehenden Konvektionswärme.

Darüber hinaus weist in einer Ausführungsform der Erfindung die erste Aufnahmeeinrichtung 2 einen oberen, V-förmigen Deckenbereich 78 auf. Die den Deckenbereich ausbildenden Wandflächen verlaufen insbesondere in einem Winkel im Bereich von etwa 120°C bis etwa 160°C zueinander. Darüber ist eine freie Zirkulationsströmung innerhalb der Aufnahmeeinrichtung 2 ausgebildet. Die Heizelemente 74 sind in der gezeigten Ausführungsform jeweils seitlich zu den Aufnahmefächern angeordnet und mindestens ein Heizelement 74' verläuft unterhalb der Aufnahmefächer 10, 10' der ersten Aufnahmeeinrichtung. Unterhalb der ersten Aufnahmeeinrichtung ist ein Flüssigkeits-Auffangbehälter 80 angeordnet, der als Sammelbehälter für die während des Grillens der Fleischerzeugnisse entstehenden Flüssigkeit verwendet wird. Zum Auffangen der beim Grillen entstehenden Flüssigkeit weist jeder Aufnahmebehälter 14, 14' ein sich in Längsrichtung des Aufnahmebehälters erstreckendes Abführelement 82 auf, das als geneigte Abführrinne ausgebildet ist. Jeder Aufnahmebehälter 14, 14' weist ein solches Abführelement 82 auf, das als geneigte Abführrinne ausgebildet und über einen Abführkanal 84 mit dem Flüssigkeits-Auffangbehälter korrespondiert. Der Auffangbehälter 80 ist zudem über ein Isolierelement zur darüber liegenden Aufnahmeeinrichtung 2 abgeschirmt, um ein Erwärmen der aufgefangenen Flüssigkeit innerhalb des Auffangbehälters 80 zu vermeiden.

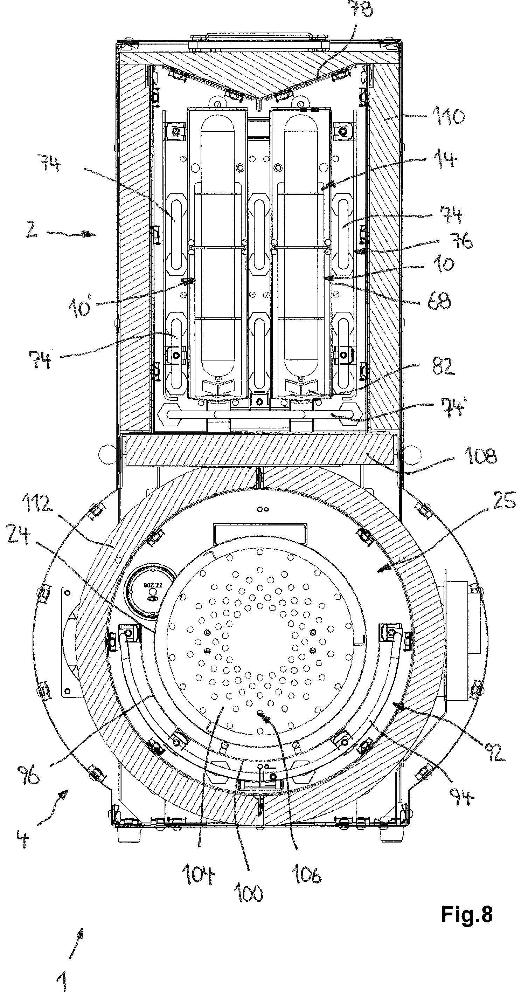

Die zweite Aufnahmeeinrichtung 4 weist ein zylindrisches Aufnahmefach 25 auf, innerhalb dem der als zylindrische Trommel ausgebildete Aufnahmebehälter 24 aufgenommen ist. In der in Figur 6 gezeigten Ausführungsform wird ersichtlich, dass der Aufnahmebehälter 24 über die Halterung 29 mit einer Antriebseinrichtung 86 reversibel koppelbar ist, die eine Drehbewegung des Aufnahmebehälters 24 um seine Längsachse generiert. Die Antriebseinrichtung 86 umfasst mindestens einen Antriebsmotor 88 und ein Übertragungsgetriebe 90. Innerhalb des Aufnahmefaches 25 ist eine Heizeinrichtung 92 mit wenigstens einem Heizelement 94 angeordnet. Das Heizelement 94 erstreckt sich über die Gesamtlänge des Aufnahmefaches und über etwa den halben Umfang des Aufnahmefaches, wobei das Heizelement spiralförmig verlegt ist. Zwischen dem Heizelement und dem Aufnahmebehälter ist ein Abschirmblech 96 angeordnet, das zwei seitliche Flächenbereiche mit Lochungen 98 aufweist. Der mittlere Flächenbereich 100 ist geschlossen und insbesondere als Krümelblech zum Auffangen von aus dem Aufnahmebehälter 24 ausgetreten Produktstücken ausgebildet. Der als zylindrische Trommel ausgebildete Aufnahmebehälter 24 weist eine Mantelfläche auf, die vollständig mit Lochungen 102 versehen ist. Zudem ist auch ein Teilbereich der Stirnwand 104 des Aufnahmebehälters 24 mit Lochungen 106 durchsetzt. Wie insbesondere aus den Figuren 6 und 8 ersichtlich, sind die erste und zweite Aufnahmeeinrichtung 2, 4 durch eine Isolierung eingehaust. Als Isolierung werden insbesondere vorgefertigte Isolierteile 108, 110, 112 aus bearbeitbarem Isolierwerkstoff ausgebildet. Die Isolierteile füllen die Aufnahmeeinrichtungen 2, 4 bis auf den Bereich der Öffnungen der jeweiligen Aufnahmeeinrichtungen 2, 4 nahezu vollständig ein.

Ähnliche oder gleiche Bauteile sind mit denselben Bezugszeichen bezeichnet.

### Bezugszeichenliste

- 1: Vorrichtung
- 2, 4: Aufnahmeeinrichtung
- 6: Gerätegehäuse
- 8: Abschnitt
- 10, 10': Aufnahmefach
- 12, 12': Öffnung
- 14, 14': Aufnahmebehälter
- 16: Bratwurst
- 18: Handgriff
- 20: Gerätegehäusefront
- 22: Abschnitt
- 24: zylindrische Trommel / Aufnahmebehälter
- 25: Aufnahmefach
- 26: Deckel
- 28: Handgriff
- 29: Halterung
- 30: Bedien- und Anzeigeeinrichtung
- 32: Abluftkanal
- 34: Ventilator
- 36: Steuereinrichtung für Abluft
- 38: Abluftklappe
- 40, 40': Auslassöffnung
- 42, 44: Zuluftklappe
- 46, 46': Einlassöffnung
- 48: Fettfilter
- 50: Luftverwirbler
- 52: Plasmakammer
- 54: Filtereinrichtung
- 55, 55': Bypass-Kanal
- 56, 56': Ventilator
- 58: Steuereinheit
- 60: Verschlussteil
- 62, 62': Innenblech und Außenblech
- 64: Dichtelement
- 66: Führungsnut
- 68, 68': Abschirmblech
- 70, 70': Abschirmblech
- 72, 72': Lochung
- 74, 74': Heizelement
- 76: Heizeinrichtung
- 78: Deckenbereich
- 80: Auffangbehälter
- 82: Abführelement
- 84: Abführkanal
- 86: Antriebseinrichtung
- 88: Antriebsmotor
- 90: Übertragungsgetriebe
- 92: Heizeinrichtung
- 94: Heizelement
- 96: Abschirmblech
- 98: Lochung
- 100: Krümelblech
- 102: Lochung
- 104: Stirnwand
- 106: Lochung
- 108, 110: Isolierteil
- 112: Isolierteil

## Patentansprüche

1. Vorrichtung (1) zum Erhitzen und/oder Garen von Lebensmitteln, insbesondere von Fleischerzeugnissen und/oder Tiefkühlprodukten, mit
einem Gerätegehäuse (6) mit mindestens einer Aufnahmeeinrichtung (2, 4),
wobei die Aufnahmeeinrichtung (2, 4) ein oder mehrere Aufnahmefächer (10, 10' 25) aufweist, welche über wenigstens eine Öffnung (12, 12') im Gerätegehäuse zugänglich sind, und einen mit dem jeweiligen Aufnahmefach (10, 10' 25) korrespondierenden in das oder aus dem Aufnahmefach (10, 10' 25) einsetz- und entnehmbare Aufnahmebehälter (14, 14' 24) für das Lebensmittel aufweist, und
einer der Aufnahmeeinrichtung (2, 4) zugeordneten Heizeinrichtung (76, 92) mit einem oder mehreren Heizelementen (74, 74', 94),
**gekennzeichnet durch** zumindest einen mit einer Aufnahmeeinrichtung (2, 4) fluidleitend koppelbaren Abluftkanal (32) mit einem ansteuerbaren Ventilator (34) zum Abführen der während des Garprozesses entstehenden Zubereitungs-Dämpfe in Form von Abluft aus dem Garraum nach dem Zubereiten der Lebensmittel, wobei innerhalb des Abluftkanals (32) eine Plasmakammer (52) zum Reinigen der Abluft aus dem Garraum angeordnet ist, wobei dem Abluftkanal (32) eine Einrichtung (36) zum Steuern von zumindest der aus dem oder den Aufnahmefächern (10, 10' 25) abzuführenden Abluft zugeordnet ist, und
wobei die Steuereinrichtung (36) für die Abluft dazu eingerichtet ist, die fluidleitende Verbindung zwischen dem Abluftkanal (32) und den Aufnahmefächern (10, 10', 25) herzustellen und zu unterbrechen.

2. Vorrichtung nach Anspruch 1,
dass die Einrichtung (36) zum Steuern der Abluft wenigstens eine ansteuerbare Abluftklappe (38) aufweist, mittels der wenigstens eine mit dem Abluftkanal (32) verbundene Auslassöffnung am Aufnahmefach (10, 10' 25) öffenbar und verschließbar ist, und vorzugsweise eine ansteuerbare Zuluftklappe (42, 44) aufweist, mittels der zumindest eine über einen Zuluftkanal mit der Umgebung verbundene Einlassöffnung am Aufnahmefach (10, 10' 25) zum Einbringen von Frischluft in das Aufnahmefach öffenbar und verschließbar ist.

3. Vorrichtung nach Anspruch 1 oder 2,
**dadurch gekennzeichnet, dass** innerhalb des Abluftkanales (32) ein der Plasmakammer (52) vorgeschalteter Luftverwirbler (50) zum Durchmischen der Abluft und vorzugsweise zum Beimischen von Umgebungsluft aus dem Gehäuseinneren angeordnet ist, wobei vorzugsweise in der Wandung des Gerätegehäuses (6) wenigstens ein Ventilator (56, 56') zum Einleiten von Umgebungsluft in das Gerätegehäuse (6) vorgesehen ist.

4. Vorrichtung nach mindestens einem der Ansprüche 1 bis 3,
**dadurch gekennzeichnet, dass** innerhalb des Abluftkanals (32) in Strömungsrichtung hinter der Plasmakammer (52) eine Filtereinrichtung (54), vorzugsweise ein Aktivkohle-Filter, angeordnet ist.

5. Vorrichtung nach mindestens einem der Ansprüche 1 bis 4,
**gekennzeichnet durch** eine elektronische Steuereinheit (58) zum Steuern von zumindest der Einrichtung (36) zum Steuern der Abluft und dem im Ablaufkanal (32) angeordneten Ventilator (34), und vorzugsweise ferner zum Steuern der Gartemperatur und/oder Garzeiten in den jeweiligen Aufnahmefächern (10, 10' 25).

6. Vorrichtung nach mindestens einem der Ansprüche 1 bis 5,
**dadurch gekennzeichnet, dass** die in die Aufnahmefächer (10, 10' 25) einsetzbaren Aufnahmebehälter (14, 14' 24) von den jeweils zugeordneten Heizeinrichtungen (76, 92) mittels Abschirmblechen (68, 68', 70, 70', 96) abgetrennt sind, wobei die Abschirmbleche (68, 68', 70, 70', 96) vorzugsweise eine Lochung (72, 72', 98) mit einer auf die Heizleistung der Heizeinrichtungen (76, 92) abgestimmte Lochungsgröße aufweisen.

7. Vorrichtung nach Anspruch 6,
**dadurch gekennzeichnet, dass** die Heizeinrichtung (76) der ersten Aufnahmeeinrichtung (2) außerhalb des von den Abschirmblechen begrenzten Aufnahmefaches (10, 10') angeordnet ist.

8. Vorrichtung nach mindestens einem der vorhergehenden Ansprüche,
**dadurch gekennzeichnet, dass** eine erste Aufnahmeeinrichtung (2) für die Fleischerzeugnisse einen im Wesentlichen V-förmigen oberen Deckenbereich (78) aufweist, der dazu eingerichtet ist, im Inneren der ersten Aufnahmeeinrichtung (2) eine Zirkulationsströmung für Gase während des Garprozesses zu erzeugen.

9. Vorrichtung nach einem der vorhergehenden Ansprüche,
**dadurch gekennzeichnet, dass** der Aufnahmebehälter (14, 14') einer ersten Aufnahmeeinrichtung (2) unterhalb der Halterung für die Fleischerzeugnisse ein Abführelement (82), vorzugsweise eine geneigte Abführrinne, zum Abführen von Flüssigkeiten aus dem Aufnahmefach (10, 10') aufweist.

10. Vorrichtung nach Anspruch 9,
**dadurch gekennzeichnet, dass** unterhalb der ersten Aufnahmeeinrichtung (2) ein mit dem Abführelement (82) am Aufnahmebehälter korrespondierender Flüssigkeits-Auffangbehälter (80) angeordnet ist, der vorzugsweise mittels einer Wärmeisolierung von dem darüber angeordneten Aufnahmefach (10, 10') abgeteilt ist.

11. Vorrichtung nach mindestens einem der vorhergehenden Ansprüche,
**dadurch gekennzeichnet, dass** die Heizeinrichtung (92) einer zweiten Aufnahmeeinrichtung (4) innerhalb des zylindrischen Aufnahmefaches (25) angeordnet und von dem bereichsweise und parallel zur Wandung des Aufnahmefaches (25) erstreckenden Abschirmblech (96) abgetrennt ist.

12. Vorrichtung nach mindestens einem der vorhergehenden Ansprüche,
**dadurch gekennzeichnet, dass** der Aufnahmebehälter (14, 14' 24) ein Verschlussteil (60) zum abdichtenden Verschließen des jeweiligen Aufnahmefaches (10, 10' 25) aufweist und ein nach außen im Wesentlichen abgeschlossener Garraum für das zu erhitzende Lebensmittel ausgebildet ist,
wobei eine zweite Aufnahmeeinrichtung (4) ein Aufnahmefach (25) mit einer in das Aufnahmefach einsetz- und entnehmbaren Trommel (24) aufweist, wobei die Trommel vorzugsweise innerhalb des Aufnahmefaches (25) drehbar aufgenommen ist, und wobei die Trommel (24) einen bevorzugt zylindrischen Aufnahmeraum aufweist, der von einer Trommelwandung begrenzt ist, die eine Lochung aufweist.

13. Vorrichtung nach Anspruch 12,
**dadurch gekennzeichnet, dass** die Trommel (25) mit einer in der Kammer () drehbaren gelagerten Halterung (29) reversibel koppel- und entkoppelbar ist, wobei die Halterung (29) mit einer Antriebseinrichtung (86) drehgebend gekoppelt ist.

14. Vorrichtung nach mindestens einem der vorhergehenden Ansprüche,
**dadurch gekennzeichnet, dass** die erste und/oder die zweite Aufnahmeeinrichtung (2, 4) von einem vorfertigbaren Isolierteil (108, 110, 112) zumindest bereichsweise umhüllt ist, das aus einem an die Form der jeweiligen Aufnahmeeinrichtung (2, 4) anpassbaren Isolierwerkstoff ausgebildet ist.

15. Vorrichtung nach mindestens einem der vorhergehenden Ansprüche,
**dadurch gekennzeichnet, dass** der Abluftkanal (32) innerhalb des Gerätegehäuses (6) oder benachbart zu dem Gerätegehäuse angeordnet ist und sich wenigstens teilweise in vertikaler Richtung erstreckt.

16. Vorrichtung nach mindestens einem der vorhergehenden Ansprüche,
**dadurch gekennzeichnet, dass** unterhalb zu der Aufnahmeeinrichtung (4) mindestens ein Auffangelement zum Auffangen von während der Garung anfallender Flüssigkeiten, insbesondere Öle oder Fette angeordnet ist, welches vorzugsweise Teil eines Flüssigkeits-Auffangbehälters (80) ist oder mit diesem kooperiert.

## Claims

1. Apparatus (1) for heating and/or cooking foodstuffs, in particular meat products and/or frozen products, comprising
an appliance housing (6) with at least one accommodating device (2, 4),
wherein the accommodating device (2, 4) has one or more accommodating compartments (10, 10', 25) which are accessible by way of at least one opening (12, 12') in the appliance housing, and an accommodating container (14, 14', 24) for the foodstuff which communicates with the respective accommodating compartment (10, 10', 25) and can be inserted into and removed from the accommodating compartment (10, 10', 25), and
a heating device (76, 92) associated with the accommodating device (2, 4) and having one or more heating elements (74, 74', 94),
**characterised by** at least one discharge air passage (32) which can be coupled in fluid-conducting relationship to an accommodating device (2, 4) and having an actuable fan (34) for discharge of the preparation vapors produced during the cooking process in the form of discharge air from the cooking chamber after preparation of the foodstuffs, wherein a plasma chamber (52) for cleaning the discharge air from the cooking chamber is arranged within the discharge air passage (32),
wherein associated with the discharge air passage (32) is a device (36) for controlling discharge air to be discharged at least from the accommodating compartment or compartments (10, 10', 25), and
wherein device (36) for controlling discharge air is adapted to produce and interrupt the fluid-conducting communication between the discharge air passage (32) and the accommodating compartments (10, 10', 25).

2. Apparatus as set forth in claim 1
**characterised in that** the device (36) for controlling the discharge air has at least one actuable discharge air flap (38), by means of which the at least one outlet opening connected to the discharge air passage (32) on the accommodating compartment (10, 10', 25) can be opened and closed, and preferably has an actuable feed air flap (42, 44), by means of which at least one inlet opening connected to the environment by way of a feed air passage on the accommodating compartment (10, 10', 25) for the introduction of fresh air into the accommodating compartment can be opened and closed.

3. Apparatus as set forth in at least one of claims 1 or 2
**characterised in that** arranged within the discharge air passage (32) is an air turbulence means (50) connected upstream of the plasma chamber (52) for mixing the discharge air and preferably for adding ambient air from the housing interior, wherein preferably provided in the wall of the appliance housing (6) is at least one fan (56, 56') for introducing ambient air into the appliance housing (6).

4. Apparatus as set forth in at least one of claims 1 through 3
**characterised in that** arranged within the discharge air passage (32) downstream of the plasma chamber (52) in the flow direction is a filter device (54), preferably an activated carbon filter.

5. Apparatus as set forth in at least one of claims 1 through 4
**characterised by** an electronic control unit (58) for controlling at least the device (36) for controlling the discharge air and the fan (34) in the discharge air passage (32) and preferably further for controlling the cooking temperature and/or cooking times in the respective accommodating compartments (10, 10', 25).

6. Apparatus as set forth in at least one of claims 1 through 5
**characterised in that** the accommodating containers (14, 14', 24) which can be inserted into the accommodating compartments (10, 10', 25) are separated from the respectively associated heating devices (76, 92) by means of screening plates (68, 68', 70, 70', 96), wherein the screening plates (68, 68', 70, 70', 96) preferably have a hole arrangement (72, 72', 98) of a hole size matched to the heating power of the heating devices (76, 92).

7. Apparatus as set forth in claim 6
**characterised in that** the heating device (76) of the first accommodating device (2) is arranged outside the accommodating compartment (10, 10') delimited by the screening plates.

8. Apparatus as set forth in at least one of the preceding claims
**characterised in that** a first accommodating device (2) for the meat products has a substantially V-shaped upper cover region (78) which is adapted to generate in the interior of the first accommodating device (2) a circulatory flow for gases during the cooking process.

9. Apparatus as set forth in one of the preceding claims
**characterised in that** the accommodating container (14, 14') of a first accommodating device (2) has below the holder for the meat products a discharge element (82), preferably an inclined discharge channel, for discharge of liquids out of the accommodating compartment (10, 10').

10. Apparatus as set forth in claim 9
**characterised in that** arranged below the first accommodating device (2) is a liquid catch container (80) communicating with the discharge element (82) on the accommodating container, which catch container is preferably divided by means of a heat insulation from the accommodating compartment (10, 10') arranged thereover.

11. Apparatus as set forth in at least one of the preceding claims
**characterised in that** the heating device (92) of a second accommodating device (4) is arranged within the cylindrical accommodating compartment (25) and is separated by the screening plate (96) extending region-wise and parallel to the wall of the accommodating compartment (25).

12. Apparatus as set forth in at least one of the preceding claims
**characterised in that** the accommodating container (14, 14', 24) has a closure portion (60) for sealingly closing the respective accommodating compartment (10, 10', 25) and an outwardly substantially closed cooking chamber for the foodstuff to be heated,
wherein a second accommodating device (4) has an accommodating compartment (25) with a drum (24) which can be inserted into and removed from the accommodating compartment, wherein the drum is preferably received rotatably within the accommodating compartment (25) and the drum (24) has a preferably cylindrical accommodating chamber which is delimited by a drum wall which has a hole arrangement.

13. Apparatus as set forth in claim 12
**characterised in that** the drum (25) can be reversibly coupled to and uncoupled from a holder (29) mounted rotatably in the chamber (), wherein the holder (29) is rotationally coupled to a drive device (86).

14. Apparatus as set forth in at least one of the preceding claims
**characterised in that** the first and/or the second accommodating device (2, 4) is at least region-wise enclosed by a pre-fabricatable insulating portion (108, 110, 112) which is formed from an insulating material which can be adapted to the shape of the respective accommodating device (2, 4).

15. Apparatus as set forth in at least one of the preceding claims
**characterised in that** the discharge air passage (32) is provided within the appliance housing (6) or adjacent to the appliance housing and which extends at least partially in the vertical direction.

16. Apparatus as set forth in at least one of the preceding claims
**characterised in that** arranged beneath the accommodating device (4) is at least one catch element for catching liquids which are produced during cooking, in particular oils or fats, which is preferably part of a liquid catch container (80) or cooperates therewith.

## Revendications

1. Dispositif (1) de réchauffage et/ou de cuisson de denrées alimentaires, notamment de produits à base de viande et/ou de produits surgelés, avec
un boîtier d'appareil (6) comportant au moins un dispositif de réception (2, 4),
dans lequel le dispositif de réception (2, 4) présente un ou plusieurs compartiments de réception (10, 10' 25) qui sont accessibles par le biais d'au moins une ouverture (12, 12') dans le boîtier d'appareil, et un contenant de réception (14, 14', 24) correspondant au compartiment de réception (10, 10' 25) respectif, pouvant être inséré dans le compartiment de réception (10, 10' 25) ou retiré de celui-ci pour la denrée alimentaire, et
un dispositif de chauffage (76, 92) associé au dispositif de réception (2, 4) comportant un ou plusieurs éléments chauffants (74, 74', 94),
**caractérisé par** au moins un canal d'évacuation d'air (32) pouvant être couplé de manière à acheminer le fluide à un dispositif de réception (2, 4) avec un ventilateur (34) pilotable pour évacuer les vapeurs de préparation générées pendant le processus de cuisson sous forme d'air vicié hors de l'espace de cuisson après la préparation des denrées alimentaires, dans lequel une chambre à plasma (52) est disposée à l'intérieur du canal d'évacuation d'air (32) pour épurer l'air vicié de l'espace de cuisson, dans lequel un dispositif (36) de commande d'au moins l'air vicié à évacuer du ou des compartiments de réception (10, 10' 25) est associé au canal d'évacuation d'air (32), et
dans lequel le dispositif de commande (36) pour l'air vicié est configuré afin d'établir et d'interrompre la liaison d'acheminement de fluide entre le canal d'évacuation d'air (32) et les compartiments de réception (10, 10', 25).

2. Dispositif selon la revendication 1,
que le dispositif (36) de commande de l'air vicié présente au moins un volet d'évacuation d'air (38) pilotable, au moyen duquel l'au moins une ouverture d'échappement reliée au canal d'évacuation d'air (32) au niveau du compartiment de réception (10, 10' 25) peut être ouverte et fermée, et présente de préférence un volet d'entrée d'air (42, 44) pilotable, au moyen duquel l'au moins une ouverture d'admission reliée par le biais d'un canal d'entrée d'air à l'environnement au niveau du compartiment de réception (10, 10' 25) pour l'introduction d'air frais dans le compartiment de réception peut être ouverte et fermée.

3. Dispositif selon la revendication 1 ou 2,
**caractérisé en ce qu'**un élément de tourbillonnement d'air (50) monté en amont de la chambre à plasma (52) est disposé à l'intérieur du canal d'évacuation d'air (32) pour mélanger l'air vicié et de préférence pour mélanger l'air ambiant provenant de l'intérieur du boîtier, dans lequel au moins un ventilateur (56, 56') est de préférence prévu dans la paroi du boîtier d'appareil (6) pour introduire de l'air ambiant dans le boîtier d'appareil (6).

4. Dispositif selon au moins l'une quelconque des revendications 1 à 3,
**caractérisé en ce qu'**un dispositif filtrant (54), de préférence un filtre à charbon actif, est disposé à l'intérieur du canal d'évacuation d'air (32) dans le sens d'écoulement derrière la chambre à plasma (52).

5. Dispositif selon au moins l'une quelconque des revendications 1 à 4,
**caractérisé par** une unité de commande électronique (58) pour commander au moins le dispositif (36) de commande de l'air vicié et le ventilateur (34) disposé dans le canal d'évacuation (32) et de préférence en outre pour commander la température de cuisson et/ou les temps de cuisson dans les compartiments de réception (10, 10' 25) respectifs.

6. Dispositif selon au moins l'une quelconque des revendications 1 à 5,
**caractérisé en ce que** les contenants de réception (14, 14' 24) pouvant être insérés dans les compartiments de réception (10, 10' 25) sont séparés des dispositifs de chauffage (76, 92) associés respectivement au moyen de tôles de protection (68, 68', 70, 70', 96), dans lequel les tôles de protection (68, 68', 70, 70', 96) présentent de préférence une perforation (72, 72', 98) avec une taille de perforation adaptée à la puissance de chauffage des dispositifs de chauffage (76, 92).

7. Dispositif selon la revendication 6,
**caractérisé en ce que** le dispositif de chauffage (76) du premier dispositif de réception (2) est disposé à l'extérieur du compartiment de réception (10, 10') délimité par les tôles de protection.

8. Dispositif selon au moins l'une quelconque des revendications précédentes,
**caractérisé en ce qu'**un premier dispositif de réception (2) pour les produits à base de viande présente une zone de plafond supérieure (78) sensiblement en forme de V, qui est configurée pour générer à l'intérieur du premier dispositif de réception (2) un flux de circulation des gaz pendant le processus de cuisson.

9. Dispositif selon l'une quelconque des revendications précédentes,
**caractérisé en ce que** le contenant de réception (14, 14') d'un premier dispositif de réception (2) présente, en dessous du support pour les produits à base de viande, un élément d'évacuation (82), de préférence une rigole d'évacuation inclinée, pour évacuer les liquides du compartiment de réception (10, 10').

10. Dispositif selon la revendication 9,
**caractérisé en ce qu'**un récipient de récupération de liquide (80) correspondant à l'élément d'évacuation (82) au niveau du contenant de réception est disposé en dessous du premier dispositif de réception (2), lequel récipient est de préférence séparé du compartiment de réception (10, 10') disposé au-dessus de celui-ci au moyen d'une isolation thermique.

11. Dispositif selon au moins l'une quelconque des revendications précédentes,
**caractérisé en ce que** le dispositif de chauffage (92) d'un second dispositif de réception (4) est disposé à l'intérieur du compartiment de réception (25) cylindrique et est séparé de la tôle de protection (96) s'étendant par endroits et parallèlement à la paroi du compartiment de réception (25).

12. Dispositif selon au moins l'une quelconque des revendications précédentes,
**caractérisé en ce que** le contenant de réception (14, 14' 24) présente une pièce de fermeture (60) pour la fermeture étanche du compartiment de réception (10, 10' 25) respectif et un espace de cuisson sensiblement fermé vers l'extérieur pour la denrée alimentaire à réchauffer, dans lequel un second dispositif de réception (4) présente un compartiment de réception (25) avec un tambour (24) pouvant être inséré et retiré dans le compartiment de réception, dans lequel le tambour est de préférence reçu de manière rotative à l'intérieur du compartiment de réception (25), et dans lequel le tambour (24) présente un espace de réception de préférence cylindrique qui est délimité par une paroi de tambour qui présente une perforation.

13. Dispositif selon la revendication 12,
**caractérisé en ce que** le tambour (25) peut être couplé et découplé de manière réversible à un support (29) logé de manière rotative dans la chambre (), dans lequel le support (29) est couplé de manière à donner la rotation à un dispositif d'entraînement (86).

14. Dispositif selon au moins l'une quelconque des revendications précédentes,
**caractérisé en ce que** le premier et/ou le second dispositif de réception (2, 4) est enveloppé au moins par endroits par une pièce isolante (108, 110, 112) préfabriquable qui est réalisée en un matériau isolant adaptable à la forme du dispositif de réception (2, 4) respectif.

15. Dispositif selon au moins l'une quelconque des revendications précédentes,
**caractérisé en ce que** le conduit d'évacuation d'air (32) est disposé à l'intérieur du boîtier d'appareil (6) ou à proximité du boîtier d'appareil et s'étend au moins partiellement dans le sens vertical.

16. Dispositif selon au moins l'une quelconque des revendications précédentes,
**caractérisé en ce qu'**au moins un élément de récupération est disposé en dessous du dispositif de réception (4) pour récupérer des liquides qui se produisent pendant la cuisson, en particulier des huiles ou des graisses, lequel fait de préférence partie d'un récipient de récupération de liquide (80) ou coopère avec celui-ci.
